# EUROPEAN PATENT APPLICATION

(11) **EP 3 211 014 A1**
(43) Date of publication of application: **30.08.2017**
(21) Application number: 15852068.4
(22) Date of filing: 15.10.2015
(51) Int. Cl.: C08F 246/00, C08F 230/04, C08F 230/08, C09D 5/16, C09D 143/00, C09D 143/04

(54) **COPOLYMER FOR ANTIFOULING COATING COMPOSITION, ANTIFOULING COATING COMPOSITION, ANTIFOULING COATING FILM**

(30) Priority: 22.10.2014 JP 2014215414
(71) Applicant: Nitto Kasei Co., Ltd., Osaka-shi Osaka 533-0031 (JP)
(72) Inventor: YASUI, Takuya, Osaka-shi Osaka 533-0031 (JP)
(74) Representative: Gulde & Partner
(86) International application number: PCT/JP2015/079173
(87) International publication number: WO 2016/063789

(57) **Abstract**

The purpose of the present invention is to provide a copolymer allowing for an antifouling coating composition used for the formation of an environment-friendly antifouling coating film, which can maintain stable coating film solubility and antifouling performance for a long time in seawater and is unlikely to be subject to coating film defects such as a crack during long-term usage in seawater.

The present invention provides a copolymer for an antifouling coating composition obtainable by copolymerizing (a) 10 to 25% by mass of a triorganosilyl group-containing monomer represented by a general formula (I), (b) 2 to 10 % by mass of one or more metal-containing polymerizable monomers represented by represented by a general formula (II) or (III), and (c) 65 to 88 % by mass of an ethylenically unsaturated monomer other than the monomers (a) and (b).

## Description

### Technical Field

The present invention relates to a copolymer for an antifouling coating composition, an antifouling coating composition, and an antifouling coating film.

Aquatic fouling organisms such as barnacles, tubeworms, common mussels, Bugula neritina, sea squirts, green laver, sea lettuce, and slimes attach to ships (especially ship bottoms), fishing tools such as fishing nets and fishing net accessories, and structures submerged in seawater such as power plant aqueducts, leading to dysfunction, impaired appearance, and other problems of the ships and so on. Since a conventional organic tin-containing copolymer has been banned, triorganosilyl group-containing copolymers and metal-containing copolymers which have low toxicity and are environment-friendly have been developed and have been used for antifouling coating compositions.

It has been studied to use tri-n-butylsilyl ester-containing copolymer, triphenylsilyl ester-containing copolymer, or triisopropylsilyl ester-containing copolymer as the triorganosilyl group-containing copolymer (Patent Literatures 1 to 6). As to the metal-containing copolymers, various studies have been made on zinc-containing copolymers, copper-containing copolymers and the like (Patent Literatures 7 to 10).

The triorganosilyl group-containing copolymer may be used for an antifouling coating composition. In this case, an antifouling coating film formed using the antifouling coating composition dissolves in seawater at a constant rate during the initial stage. However, the dissolving rate of the coating film gradually increases. After a long period has passed, the dissolving rate of the coating film becomes too large. For this reason, it is difficult to design a coating material. In addition, coating films that have been in the seawater for a long period of time may cause coating film defects such as cracks.

On the other hand, in the case of using a coating composition of a metal-containing copolymer, the dissolution rate in seawater at the initial stage is very high, and the dissolution rate of the coating film becomes too small over a long period of time. For this reason, it is difficult to design a coating material. In addition, as the dissolution rate decreases, long-term antifouling performance may not be maintained.

In order to solve these problems, a mixture of a triorganosilyl group-containing copolymer and a metal-containing copolymer, or a copolymer of a triorganosilyl group-containing polymerizable monomer and a metal-containing polymerizable monomer and the like have been studied.

However, the above-mentioned mixture has poor compatibility with each other, and there is a problem that coating film defects such as cracks occurs early (Patent Literature 11). On the other hand, the copolymer has a problem that the dissolution rate of the coating film becomes extremely large, causing a coating film defect, which makes it very difficult to control the dissolution of the coating film (Patent Literature 12, 13).

Thus, there have been no practical antifouling coating compositions that maintain a moderate hydrolysis property in seawater for a long period of time and do not cause coating film defects such as cracks.

### Citation List

### Patent Literature

[Patent Literature 1] JP-A-Hei 7-102193
[Patent Literature 2] JP-A-Hei 8-269390
[Patent Literature 3] JP-A-Hei 9-194790
[Patent Literature 4] JP-A-Hei 10-30071
[Patent Literature 5] JP-A-2001-226440
[Patent Literature 6] JP-A-2005-082725
[Patent Literature 7] JP-A-Sho 62-57464
[Patent Literature 8] JP-A-Hei 10-158547
[Patent Literature 9] JP-A-Hei 11-35877
[Patent Literature 10] JP-A-2001-342421
[Patent Literature 11] WO2001/81489
[Patent Literature 12] JP-A-Hei 10-168350
[Patent Literature 13] JP-A-2003-252931

### Summary of Invention

### Technical Problem

The purpose of the present invention is to provide a copolymer allowing for an antifouling coating composition used for the formation of an environment-friendly antifouling coating film, which can maintain stable coating film solubility and antifouling performance for a long time in seawater and is unlikely to be subject to coating film defects such as a crack during long-term usage in seawater.

### Solution to Problem

As a result of diligent research aimed at solving the above-mentioned problems, the present inventors have found that the above-mentioned problems can be solved by employing a copolymer of a monomer mixture containing a triorganosilyl group-containing polymerizable monomer and a metal-containing polymerizable monomer in a specific ratio as the monomers supplement the respective defects, thereby completing the present invention.

That is, the present invention provides a copolymer for an antifouling coating composition obtainable by copolymerizing (a) 10 to 25% by mass of a triorganosilyl group-containing monomer represented by a general formula (I), (b) 2 to 10 % by mass of one or more metal-containing polymerizable monomers represented by represented by a general formula (II) or (III), and (c) 65 to 88 % by mass of an ethylenically unsaturated monomer other than the monomers (a) and (b).

By forming an antifouling coating film with the antifouling coating composition using the copolymer for antifouling coating composition of the present invention, it is possible to maintain a stable coating film dissolution rate for a long period by improving a slow dissolution rate in seawater in the initial stage, and a slow dissolution rate in the latter half stage, which is characteristic in a antifouling coating composition using a metal-containing copolymer.

Hereinafter, the present invention will be explained in detail.

The antifouling coating composition of the present invention contains a copolymer A for an antifouling coating composition.

### <Copolymer A for Antifouling Coating Composition>

A copolymer A for antifouling coating composition of the present invention is a copolymer obtainable by copolymerizing the monomers (a) to (c).
(a) 10 to 25% by mass of a triorganosilyl group-containing monomer represented by the following general formula (I)
(b) 2 to 10 % by mass of one or more metal-containing polymerizable monomers represented by the following general formula (II) or (III), and
(c) 65 to 88% by mass of an ethylenically unsaturated monomer other than the monomers (a) and (b)

Further, the monomer (a) is preferably 15 to 20% by mass. The monomer (b) is preferably 4 to 7% by mass, and the mass ratio represented by the monomer (a)/monomer (b) is preferably 2 or more.

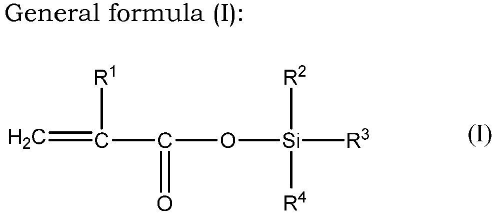

In the formula, R¹ is a group selected from a hydrogen atom and a methyl group, and each of R² to R⁴ is a group selected from an alkyl group and an aryl group, which are the same or different from each other.

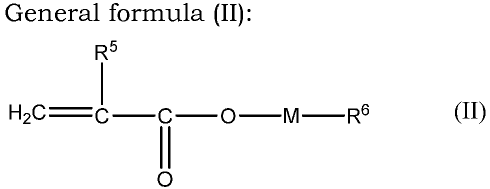

In the formula, R⁵ is a group selected from a hydrogen atom or a methyl group, M represents a metal atom of Mg, Zn or Cu, and R⁶ represents an organic acid residue.

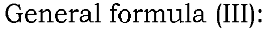

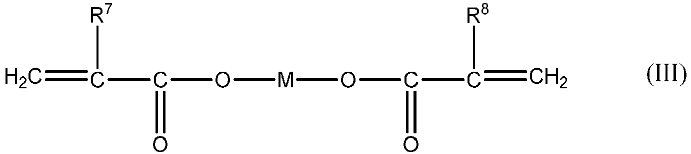

In the formula, R⁷ and R⁸ are groups selected from a hydrogen atom or a methyl group, and M represents a metal atom of Mg, Zn or Cu.

### << Copolymer A >>

The copolymer A contains 10 to 25% by mass of monomer (a), 2 to 10% by mass of monomer (b), and 65 to 88% by mass of the monomer (c). The monomer (c) is an ethylenically unsaturated monomer other than the monomers (a) and (b). By using the copolymer A, it is possible to balance the dissolution rate of the coating film and the water permeability to the coating film in seawater, to suppress the formation of a swollen layer, and maintain the stable surface renewal property for a long period of time. Thus, it is possible to effectively exhibit the desired antifouling effect. In addition, excellent recoating performance of the coating film can be exhibited.

### (Monomer (a): Triorganosilyl group-containing monomer)

The number of carbon atoms of the alkyl group or aryl group represented by R² to R⁴ is, for example, 1 to 10, preferably 1 to 6. Examples of the alkyl group or the aryl group include methyl group, n-propyl group, isopropyl group, n-butyl group, s-butyl group, cyclohexyl group, and phenyl group. Among them, triisopropyl group, tri-n-butyl group and triphenyl group are preferable from the viewpoints and reasons of production cost and ease of raw material availability, and triisopropyl group is particularly preferable.

Examples of the monomer (a) include triisopropylsilyl (meth)acrylate, tri n-butylsilyl (meth)acrylate, triphenylsilyl (meth)acrylate and the like. Among them, triisopropylsilyl (meth)acrylate is preferable from the viewpoints of the production process, production cost, availability, environmental safety, and coating film physical properties.

These monomers (a) can be used alone or in combination of two or more.

### (Monomer (b): Metal-containing polymerizable monomer)

The monomer (b) is composed of one or more monomers represented by the general formula (II) or (III).

Examples of the metal atom represented by M in formulas (II) and (III) include zinc, magnesium, and copper.

In the formula (II), the carbon number of the organic acid residue represented by R⁶ is, for example, 6 to 20, preferably 7 to 15, and more preferably 7 to 12. Examples of the organic acid include versatic acid, octylic acid, lauric acid, stearic acid, naphthenic acid and the like. Versatic acid is preferable from the viewpoint of availability of raw materials and coating film physical properties.

Examples of the compound represented by the formula (II) include zinc versatate (meth)acrylate, magnesium versatate (meth)acrylate, copper versatate (meth)acrylate, zinc octylate (meth)acrylate, magnesium octylate (meth)acrylate, copper octylate (meth)acrylate, zinc laurate (meth)acrylate, magnesium laurate (meth)acrylate, copper laurate (meth)acrylate, zinc stearate (meth)acrylate, magnesium stearate (meth)acrylate, copper stearate (meth)acrylate, zinc naphthenate (meth)acrylate, magnesium naphthenate (meth)acrylate, copper naphthenate (meth)acrylate and the like.

Examples of the compound represented by the formula (III) include zinc (meth)acrylate, magnesium (meth)acrylate, copper (meth)acrylate and calcium (meth)acrylate.

The monomer (b) is preferably zinc versatate (meth)acrylate, copper versatate (meth)acrylate, zinc (meth)acrylate, copper (meth)acrylate from the viewpoints of the production process, production cost, raw material availability, environmental safety, and coating film physical properties

These can be used alone or in combination of two or more.

### (Monomer (c))

Examples of the monomer (c) include a (meth)acrylate compound, a vinyl compound, an aromatic compound, a dialkyl ester compound of a dibasic acid, and the like.

Examples of the (meth)acrylate compound include methyl (meth)acrylate, ethyl (meth)acrylate, butyl (meth)acrylate, 2-ethylhexyl (meth)acrylate, 2-methoxyethyl (meth)acrylate, 2-methoxypropyl (meth)acrylate, 4-methoxybutyl (meth)acrylate, polyethylene glycol methyl ether (meth)acrylate, 2- hydroxyethyl (meth)acrylate, cyclohexyl (meth)acrylate, benzyl (meth)acrylate, phenyl (meth)acrylate, polycaprolactone modified hydroxyethyl (meth)acrylate, tetrahydrofurfuryl (meth)acrylate, acrylamide and the like.

Examples of the vinyl compound include vinyl compounds having functional groups such as vinyl chloride, vinylidene chloride, acrylonitrile, methacrylonitrile, vinyl acetate, vinyl benzoate, vinyl butyrate, butyl vinyl ether, lauryl vinyl ether, N-vinyl pyrrolidone.

Examples of the aromatic compound include styrene, vinyltoluene, α-methylstyrene and the like.

Examples of dialkyl ester compounds of dibasic acid include dimethyl maleate, dibutyl maleate, dimethyl fumarate and the like.

In particular, the monomer (c) is preferably (meth)acrylate from the viewpoint/reason of physical properties of coating film, and more preferably methyl methacrylate, butyl (meth)acrylate, 2-methoxyethyl (meth)acrylate and the like.

These monomers (c) can be used alone or in combination of two or more.

A preferred embodiment of the copolymer A contained in the composition of the present invention is a copolymer of at least one monomer (a) selected from triisopropylsilyl (meth)acrylate; at least one monomer (b) selected from zinc versatate (meth)acrylate, copper versatate (meth)acrylate, zinc (meth)acrylate, copper (meth)acrylate; and at least one monomer (c) selected from methyl methacrylate, butyl (meth)acrylate, 2-methoxyethyl (meth)acrylate.

The weight average molecular weight (Mw) of the copolymer A is preferably 2,000 to 100,000, particularly preferably 4,000 to 50,000. When Mw is 2,000 to 100,000, the coating film is not brittle and the coating film is appropriately dissolved. Therefore, the desired antifouling effect can be effectively exhibited. Mw can be measured for example by gel permeation chromatography (GPC).

The copolymer A can be any of a random copolymer, an alternating copolymer, a periodic copolymer, or a block copolymer of the monomer (a), the monomer (b) and the monomer (c).

The copolymer A can be obtained, for example, by polymerizing the monomer (a), the monomer (b) and the monomer (c) in the presence of a polymerization initiator.

As the polymerization initiator used in the polymerization reaction, the same polymerization initiators as those exemplified above can be used alone or in combination of two or more. As the polymerization initiator, AIBN and t-butylperoxy 2-ethylhexanoate are particularly preferable. The molecular weight of the copolymer A can be adjusted by suitably setting the amount of the polymerization initiator. It is also possible to use a chain transfer agent such as mercaptan or α-methylstyrene dimer.

Examples of the polymerization method include solution polymerization, bulk polymerization, emulsion polymerization, suspension polymerization and the like. Among them, solution polymerization is particularly preferable from the viewpoint that the copolymer A can be obtained conveniently and accurately.

In the polymerization reaction, an organic solvent may be used as necessary. Examples of the organic solvent include aromatic hydrocarbon solvents such as xylene and toluene; aliphatic hydrocarbon solvents such as hexane and heptane; ester solvents such as ethyl acetate, butyl acetate, isobutyl acetate, and methoxypropyl acetate; alcohol solvents such as isopropyl alcohol, butyl alcohol and propylene glycol monomethyl ether; ether solvents such as dioxane, diethyl ether and dibutyl ether; ketone solvents such as methyl ethyl ketone and methyl isobutyl ketone. Among them, xylene, butyl alcohol and propylene glycol monomethyl ether are more preferable. These solvents may be used alone or in combination of two or more.

The reaction temperature in the polymerization reaction may be appropriately set according to the type of the polymerization initiator and the like, and is usually 70 to 140 °C, preferably 80 to 120 °C. The reaction time in the polymerization reaction may be appropriately set according to the reaction temperature and the like, and is usually about 4 to 8 hours. The polymerization reaction is preferably carried out in an inert gas atmosphere such as nitrogen gas or argon gas.

The content of the copolymer A in the composition of the present invention is not particularly limited, but is usually 20 to 70% by mass, preferably 40 to 60% by mass in the solid content of the composition of the present invention. When the content of the copolymer A is 20% by mass to 70% by mass, the formation of the swollen layer can be suppressed by balancing the dissolution rate of the coating film in the seawater and the water permeability to the coating film, a stable surface renewal property for a long period of time can be maintained and a desired antifouling effect can be effectively exhibited. In addition, excellent recoating performance of the coating film can be exhibited.

In addition to the copolymer A, an antifoulant B, a release modifier C, a plasticizer D, another resin E, and the like can be blended into the antifouling coating composition of the present invention, if necessary. As a result, excellent antifouling effect can be exerted.

### <Antifoulant B>

There is no limitation to the antifoulants B as long as they have a killing or repelling effect against aquatic fouling organisms. Examples can include inorganic and organic antifoulants.

Examples of the inorganic antifoulants include cuprous oxide, copper thiocyanate (general name: copper rhodanide), cupronickel, and copper powder. Among them, cuprous oxide and copper rhodanide are particularly preferred.

Examples of the organic antifoulants include: organic copper compounds such as 2-mercaptopyridine-N-oxide copper (general name: copper pyrithione) and the like; organic zinc compounds such as 2-mercaptopyridine-N-oxide zinc (general name: zinc pyrithione), zinc ethylene bis(dithio carbamate) (general name: zineb), zinc bis(dimethyldithiocarbamate) (general name: ziram), dizinc bis(dimethyldithiocarbamate)ethylenebis(dithiocarbamate) (general name: polycarbamate) and the like; organic boron compounds such as pyridine-triphenylborane, 4-isopropyl pyridyl-diphenylmethyl borane, 4-phenyl pyridiyl-diphenyl borane, triphenylboron-n-octadecyl amine, triphenyl[3-(2-ethylhexyloxy) propyl amine]boron and the like; maleimide compounds such as 2,4,6-trichloromaleimide, N-(2,6-diethylphenyl)-2,3-dichloromaleimide and the like; and 4,5-dichloro-2-n-octyl-3-isothiazolone (general name: Sea-Nine 211), 3,4-dichlorophenyl-N-N-dimethylurea (general name: diuron), 2-methylthio-4-t-butylamino-6-cyclopropylamino-s-triazine (general name: Irgarol 1051), 2,4,5,6-tetrachloroisophthalonitrile (general name: chlorothalonil), N-dichlorofluoromethylthio-N',N'-dimethyl-N-p-tolylsulfamide (general name: tolylfluanid), N-dichloromethylthio-N',N'-dimethyl-N-phenylsulfamide (general name: dichlofluanid), 2-(4-thiazolyl)benzimidazole (general name: thiabendazole), 3-(benzo[b]thien-2-yl)-5,6-dihydro-1,4,2-oxathiazine-4-oxide (general name: bethoxazine), 2-(p-chlorophenyl)-3-cyano-4-bromo-5-trifluoromethyl pyrrole (general name: ECONEA 028), etc. Among them, particularly preferred are zinc pyrithione, copper pyrithione, pyridine-triphenylborane, 4-isopropyl pyridyl-diphenylmethyl borane, bethoxazine, zineb, Sea-Nine 211, and Irgarol 1051. More preferred are copper pyrithione, zinc pyrithione, pyridine-triphenylborane, and bethoxazine.

As the antifoulant B, preferred are cuprous oxide, copper rhodanide, zinc pyrithione, copper pyrithione, pyridine-triphenylborane, 4-isopropyl pyridyl-diphenylmethyl borane, bethoxazine, zineb, Sea-Nine 211, Irgarol 1051, tolylfluanid, and dichlofluanid. More preferred are cuprous oxide, copper pyrithione, zinc pyrithione, pyridine-triphenylborane, and Sea-Nine 211.

These antifoulants may be used singly or in combination.

The amount of the antifoulant B in the composition of the present invention is not particularly limited, and is usually from 0.1 to 75% by mass, and preferably from 1 to 60% by mass with respect to the solid content of the composition of the present invention. When the amount of the antifoulant B is less than 0.1% by mass, a sufficient antifouling effect might not be obtained. When the amount of the antifoulant B is over 75% by mass, the obtained coating film is fragile, and adherence of the coating film to the coated object is weak, and thus the coating film does not sufficiently exhibit the function as an antifouling coating film.

### <Release Modifier C>

Examples of the release modifier C include rosin, a rosin derivative and a metal salt thereof, monocarboxylic acid and a salt thereof, and an alicyclic hydrocarbon resin. These release modifiers C may be used singly or in combination.

Examples of the rosin includes tall oil rosin, gum rosin, and wood rosin. Examples of the rosin derivative include hydrogenated rosin, disproportionated rosin, maleinized rosin, formylated rosin, and polymerized rosin. A reaction product of a metal compound with rosin can be used as a metal salt of the rosin or a metal salt of the rosin derivative. Examples of the metal salt of rosin include a zinc (or copper) salt of gum rosin, a zinc (or copper) salt of wood rosin, and a zinc (or copper) salt of tall oil rosin. Examples of the metal salt of the rosin derivative include a zinc (or copper) salt of hydrogenated rosin, a zinc (or copper) salt of disproportionated rosin, a zinc (or copper) salt of maleinized rosin, a zinc (or copper) salt of formylated rosin, and a zinc (or copper) salt of polymerized rosin.

Examples of the monocarboxylic acid include C₅₋₃₀ fatty acid, synthetic fatty acid, and naphthenic acid. Examples of a salt of the monocarboxylic acid include copper salts, zinc salts, magnesium salts, and calcium salts.

Examples of the commercially available alicyclic hydrocarbon resin include Quintone 1500, 1525L, and 1700 (product name; manufactured by ZEON CORPORATION).

In view of giving the composition of the present invention a suitably facilitated elution property, the composition preferably contains at least one member selected from the group consisting of rosin, a rosin derivative, and a metal salt thereof as the release modifier C. In view of improving crack resistance and water resistance, the composition more preferably contains a copper or zinc salt of rosin or a copper or zinc salt of a rosin derivative.

The amount of the release modifier C in the composition of the present invention is usually from 1 to 80 parts by mass and preferably from 10 to 50 parts by mass with respect to 100 parts by mass of the copolymer A. When the release modifier C is less than 1 part by mass, the effect of preventing attachment of aquatic fouling organisms, in particular, during rigging cannot be expected. When the release modifier C is more than 80 part by mass, defects such as cracks and exfoliation are likely to occur in the coating film and there is a possibility that the aquatic fouling organism adhesion preventing effect cannot be sufficiently exhibited.

### <Plasticizer D>

By adding the plasticizer D to the antifouling coating composition of the present invention, it is possible to improve the plasticity of the composition, and as a result it is possible to suitably form a strong coating film.

Examples of the plasticizer D include: phosphate esters such as tricresyl phosphate, trioctylphosphate, triphenyl phosphate and the like; phthalate esters such as dibutyl phthalate, dioctyl phthalate and the like; adipate esters such as dibutyl adipate, dioctyl adipate and the like; sebacate esters such as dibutyl sebacate, dioctyl sebacate and the like; epoxidized oils and fats such as epoxidized soybean oil, epoxidized linseed oil and the like; alkyl vinyl ether polymers such as a methyl vinyl ether polymer, an ethyl vinyl ether polymer and the like; polyalkylene glycols such as polyethylene glycol, polypropylene glycol and the like; and t-nonylpentasulfide, vaseline, polybutene, tris(2-ethyl hexyl) trimellitate, silicone oil, liquid paraffin, and chlorinated paraffin. These plasticizers may be used singly or in combination.

The amount of the plasticizer D in the composition of the present invention is usually from 0.1 to 20 parts by mass and preferably from 0.5 to 10 parts by mass with respect to 100 parts by mass of the copolymer (A).

### <Other Resin E>

The other resin E is added to the antifouling coating composition of the present invention. This makes it possible to reduce cost without impairing the effects of the present invention. Also, a synergistic effect with the properties of the resin E can be obtained.

Examples of the other resin E include a (meth)acrylic resin, an alkyd resin, a polyester resin, a chlorinated rubber resin, and a vinyl resin.

The other resin E in the composition of the present invention may be contained in an amount of 1 to 200 parts by mass, preferably 10 to 100 parts by mass with respect to 100 parts by mass of the copolymer A.

### <Other Additives>

Furthermore, the antifouling coating composition of the present invention, if necessary, may include a pigment, a dye, an antifoaming agent, an anti-sagging agent, a dispersant, an antisettling agent, a dehydrating agent, and/or an organic solvent.

Example of the pigment include zinc oxide, red iron oxide, talc, titanium oxide, silica, calcium carbonate, barium sulfate, calcium oxide, and magnesium oxide. They can be used singly or in combination.

Examples of the dye include various kinds of organic dyes soluble in an organic solvent.

Examples of the antifoaming agent include a silicone resin-based antifoaming agent and an acryl resin-based antifoaming agent.

Examples of the anti-sagging agent, the dispersant or the antisettling agent include fatty acid amide wax and oxidized polyethylene.

Examples of the dehydrating agent include an anhydrous gypsum, a synthetic zeolite-based adsorbent, orthoesters, silicates such as tetraethoxysilane, and isocyanates. They can be used singly or in combination.

Examples of the organic solvent include solvents such as an aliphatic solvent, an aromatic solvent, a ketone-based solvent, an ester-based solvent, and an ether-based solvent which are usually used in the antifouling coating material. They can be used singly or in combination.

### <Method for Producing Antifouling Coating Composition>

The antifouling coating composition of the present invention can be produced, for example, by mixing and dispersing a mixed solution containing the copolymer A and the like using a dispersing machine.

The content of the copolymer A or the like in the mixed solution may be appropriately adjusted so as to be the content of the copolymer A or the like in the antifouling coating composition.

The mixed solution is preferably obtained by dissolving or dispersing various materials such as copolymer A in a solvent. As the solvent, the organic solvent mentioned above can be used.

As the dispersing machine, for example, one that can be used as a fine pulverizer can be preferably used. For example, commercially available homomixers, sand mills, bead mills and the like can be used. In addition, a vessel equipped with a stirrer to which glass beads for mixing and dispersing and the like are added may be used to mix and disperse the mixed solution.

### <Antifouling Treatment, Antifouling Coating Film, and Coated Object>

The antifouling treatment of the invention is characterized in that an antifouling coating film is formed using the above-explained antifouling coating composition on the surface of an object that is subjected to coating. The antifouling treatment of the present invention can prevent adhesion of aquatic fouling organisms by the gradual dissolution of the surface of the antifouling coating film such that the surface of the coating film is continually renewed. After the dissolution of the coating film, the antifouling effect can be continuously exhibited by recoating the composition.

Examples of objects on which a coating film can be formed include ships (in particular, ship bottoms), fishing tools, and structures submerged in seawater. Examples of the fishing tools include fishing nets for use in aquaculture or in fixed netting, and fishing net accessories such as ropes and floats attached to fishing nets. Examples of the structures submerged in seawater include power plant aqueducts, bridges, and port facilities.

The antifouling coating film can be formed by applying the antifouling coating composition onto the surface (entirely or partially) of an object on which the coating film is to be formed.

Examples of the coating method include brush coating, spray coating, dipping, flow coating, and spin coating. These coating methods may be employed singly or in combination.

The coating composition is dried after the application. The drying temperature may be room temperature. The drying time may be suitably selected depending on the thickness of the coating film, etc.

The antifouling coating film of the present invention formed by using the antifouling coating composition described above is well balanced between the dissolution rate of the coating film and the water permeability to the coating film in seawater, and thus stable surface renewal property is maintained, and further, the recoatability is excellent.

The thickness of the antifouling coating film may be suitably selected depending on types of an object on which the coating film is to be formed, the navigation speed of a ship, the seawater temperature, etc. For example, when the object on which a coating film is formed is a ship bottom, the thickness of the antifouling coating film is usually from 50 to 500 µm, and preferably from 100 to 400 µm.

The antifouling coating film of the present invention has a suitable hardness. Specifically, the antifouling coating film of the present invention has a hardness enough to cause no coating film defects such as cold flow.

The coated object of the present invention has the antifouling coating film on its surface. The coated object of the present invention may have the antifouling coating film on the entire surface thereof or on the partial surface thereof. The coated object of the present invention is provided with a coating film having long-term stable surface renewal and excellent recoating performance by improving the balance between the dissolution rate of the coating film and the water permeability to the coating film in seawater. Accordingly, the coated object can be preferably applied for the above ships (in particular, ship bottoms), fishing tools, structures submerged in seawater, etc.

For example, when the antifouling coating film is formed on the surface of a ship bottom, the antifouling coating film gradually dissolves from the surface, so that the coating film surface is always renewed. This prevents the adhesion of aquatic fouling organisms. Furthermore, the hydrolysis rate of the antifouling coating film is desirably controlled. Hence, ships benefit from the antifouling effect for a long period of time. Additionally, even when the ships are not moving, for example, during anchorage, rigging, etc., the adhesion and accumulation of aquatic fouling organisms are barely observed and the antifouling effect is exhibited for a long time.

In addition, the surface of the antifouling coating film is basically free from cracking or peeling even after a long period of time. Accordingly, it is unnecessary to completely remove the existing coating film before re-forming a new coating film. Thus, by directly recoating the antifouling coating composition, the antifouling coating film can be effectively formed. This makes it possible to continuously maintain the antifouling effect in a simple and inexpensive manner.

The following illustrates Examples, etc., and further clarifies characteristics of the present invention. The present invention, however, is not limited to these Examples.

In each of Production Examples, Comparative Production Examples, Examples, and Comparative Examples, "%" denotes "% by mass". The viscosity was determined at 25°C using a Brookfield viscometer. The weight-average molecular weight (Mw) was determined by gel permeation chromatography (GPC) (using a polystyrene standard). GPC was performed under the following conditions.

Equipment: LC-10AT manufactured by Shimadzu Corporation
Guard column: TSK guard column α (manufactured by Tosoh Corporation)
Column: TSK gel α type (α-M) 7.8 mm I.D. 30 cm (made by Tosoh Corporation) two series connection
Flow rate: 1.0 mL/min
Detector: RI
Column thermostatic chamber temperature: 40 °C
Development solvent: 20 mM LiBr/DMF solution
Sample concentration: 10 g/L
Injection volume: 50 µL

The non-volatile content was determined by heating for 1 hour at 125 °C.

The amounts of each component shown in Tables 1 to 2 are represented in grams.

### <Production Example of Solution Containing Monomer (b)>

Production Examples 1 to 4 are production examples of the solution containing monomer (b).

### << Production Example 1 (Production Example of Solution Containing Monomer (b)-1) >>

350 g of propylene glycol monomethyl ether (PGM), 144 g of zinc oxide and 3 g of water were charged in a flask equipped with a thermometer, a reflux condenser, a stirrer and a dropping funnel and heated to 75 °C under a nitrogen atmosphere. Thereafter, a mixed solution of 127 g of acrylic acid and 300 g of versatic acid (acid value 330 mg KOH/g) was added dropwise over 3 hours. After completion of the dropwise addition, aging for another 2 hours resulted in a pale yellow transparent liquid. Thereafter, the mixture was cooled and 160 g of PGM was added to obtain a solution containing a monomer (b)-1. The solid content of this solution was 50.1%. The composition of the solid content in the solution containing monomer (b)-1 was calculated by a method described later and was found to be as follows.
The sum of zinc versatate acrylate and zinc diacrylate (monomer (b)-1): 60% by mass
By-produced zinc versatate (organic acid metal salt): 40% by mass

### << Production Example 2 (Production Example of Solution Containing Monomer (b)-2) >>

353 g of propylene glycol monomethyl ether (PGM), 144 g of zinc oxide and 3 g of water were charged in a flask equipped with a thermometer, a reflux condenser, a stirrer and a dropping funnel and heated to 75 °C in a nitrogen atmosphere. Thereafter, a mixed solution of 152 g of methacrylic acid and 300 g of versatic acid (acid value 330 mg KOH/g) was added dropwise over 3 hours. After completion of the dropwise addition, aging for another 2 hours resulted in a pale yellow transparent liquid. Thereafter, the mixture was cooled and 160 g of PGM was added to obtain a solution containing a monomer (b)-2. The solid content of this solution was 50.5%. The composition of the solid content in the solution containing the monomer (b)-2 was as follows.
The sum of zinc versatate methacrylate and zinc dimethacrylate (monomer (b)-2): 60% by mass
By-produced zinc versatate (organic acid metal salt): 40% by mass

### << Production Example 3 (Production Example of Solution Containing Monomer (b)-3) >>

353 g of propylene glycol monomethyl ether (PGM), 172 g of copper hydroxide and 3 g of water were charged in a flask equipped with a thermometer, a reflux condenser, a stirrer and a dropping funnel, and heated to 75 °C under a nitrogen atmosphere. Thereafter, a mixed solution of 127 g of acrylic acid and 300 g of versatic acid (acid value 330 mg KOH/g) was added dropwise over 3 hours. After completion of the dropwise addition, aging for 2 hours further resulted in a dark green transparent liquid. Thereafter, the mixture was cooled and 186 g of PGM was added to obtain a solution containing a monomer (b)-3. The solid content of this solution was 50.2%. The composition of the solid content in the solution containing the monomer (b)-3 was as follows.
The sum of copper versatate acrylate and copper diacrylate (monomer (b)-3): 60% by mass
By-produced copper versatate (organic acid metal salt): 40% by mass

### << Production Example 4 (Production Example of Solution Containing Monomer (b)-4) >>

270 g of propylene glycol monomethyl ether (PGM), 96 g of zinc oxide and 3 g of water were charged in a flask equipped with a thermometer, a reflux condenser, a stirrer and a dropping funnel, and heated to 75 °C under a nitrogen atmosphere. Thereafter, a mixed solution of 85 g of acrylic acid and 300 g of naphthenic acid (acid value 220 mg KOH/g) was added dropwise over 3 hours. After completion of the dropwise addition, aging for another 2 hours resulted in a pale yellow transparent liquid. Thereafter, the mixture was cooled and 165 g of PGM was added to obtain a solution containing a monomer (b)-4. The solid content of this solution was 50.5%. The composition of the solid content in the solution containing the monomer (b)-4 was as follows.
The sum of zinc naphthenate acrylate and zinc diacrylate (monomer (b)-4): 50% by mass
By-produced zinc naphthenate (organic acid metal salt): 50% by mass

### << Production Example 5 (Production Example of Solution Containing Monomer (b)-5) >>

270 g of propylene glycol monomethyl ether (PGM), 72 g of zinc oxide, and 3 g of water were charged in a flask equipped with a thermometer, a reflux condenser, a stirrer and a dropping funnel and heated to 75 °C under a nitrogen atmosphere. Thereafter, a mixed solution of 64 g of acrylic acid and 300 g of rosin (acid value 167 mg KOH/g) was added dropwise over 3 hours. After completion of the dropwise addition, aging for another 2 hours resulted in a pale yellow transparent liquid. After cooling, 130 g of PGM was added to obtain a solution containing a monomer (b)-5. The solid content of this solution was 50.0%. The composition of the solid content in the solution containing the monomer (b)-5 was as follows.
The sum of rosin zinc acrylate and zinc diacrylate (monomer (b)-5): 50% by mass
By-produced rosin zinc (organic acid metal salt): 50% by mass

### <Method of Specifying Composition of Solid Content of Solution Containing Monomer (b)>

The amount (% by mass) of the monomer (b) in the solid content of the solution containing the monomer (b) and the amount (% by mass) of the by-produced organic acid metal salt were determined by the following method.

First, the copolymer obtained using the target solution containing the monomer (b) is reprecipitated in a large amount of n-hexane. In the solution containing the monomer (b), an organic acid metal salt produced as a by-product in the production process exists, but since it is not involved in the polymerization, it remains intact in the copolymer solution. In addition, these organic acid metal salts are generally soluble in n-hexane. Therefore, by the reprecipitation operation, the organic acid metal salt is extracted into n-hexane and separated from the copolymer solution. By measuring the extraction amount when the extraction amount reaches a constant weight and dividing the extraction amount by the solid content value of the added copolymer, the amount (% by mass) of the organic acid metal salt can be determined. From the calculation, the amount (% by mass) of the remaining monomer (b) represented by the general formula (II) or (III) is calculated. The rows of "Solution Containing Monomer (b)" in Tables 1 to 2 show the amount of the monomer (b) determined from the composition determined here and the charged amount of the solution containing the monomer (b), and the latter is shown in parentheses. For example, in Production Example 6 of Table 1, the mass of the monomer (b)-1 is 5 g, and the charged amount of the solution containing the monomer (b) is 16.7 g.

On the other hand, when rosin is used as the organic acid like the copolymer A-13, the polarity greatly changes from the above, and the rosin metal salt becomes insoluble to n-hexane, and the copolymer not containing the rosin metal salt becomes soluble to n-hexane. Therefore, the composition of the copolymer A-13 was analyzed as follows.

First, 100 g (50 g as a solid content) of copolymer A-13 is collected and reprecipitation operation is performed in a large amount of n-hexane. Then, a copolymer not containing rosin metal salt is selectively extracted in n-hexane. A part of the extract was concentrated to obtain 10 g of a solid content. This was redissolved in THF, and 100 g of a 2% NaOH aqueous solution was added thereto for hydrolysis treatment. Thereafter, 4% hydrochloric acid was added to adjust the liquidity to the acidic side, and extraction was performed with toluene. Triisopropylsilanol and rosin were distributed on the organic layer side, and 7.97 g of the hydrolyzed resin was separated as a precipitate on the aqueous layer side. This resin was dissolved in ethanol and its acid value was measured, and the acid value of the solid content 70 mg KOH/g. On the other hand, 1.36 g (7.80 mmol) of triisopropylsilanol was separated from the organic layer by distillation to obtain 0.22 g (0.73 mmol in terms of abietin) of rosin as a residue.

From the amount of rosin obtained by this operation, the amount of the monomer represented by the formula (II) was determined, and the amount of the monomer represented by the general formula (III) was also determined from the acid value and the silanol amount. As a result, the amount of the monomer (b)-5 was calculated as 50% by mass.

### <Production Example of Copolymer Solution>

Production Examples 6 to 18 and Comparative Production Examples 1 to 10 are production examples of the copolymer solutions A-1 to A-13 and B-1 to B-10.

### << Production Example 6 (Copolymer Solution A-1) >>

30 g of xylene and 30 g of propylene glycol monomethyl ether (PGM) were charged in a flask equipped with a thermometer, a reflux condenser, a stirrer and a dropping funnel, and while stirring at 85 ± 5 °C in a nitrogen atmosphere, 15 g of triisopropylsilyl acrylate and 16.7 g of a solution containing 5 g of the monomer (b)-1, 50 g of methyl methacrylate, 20 g of n-butyl acrylate, 5 g of 2-methoxyethyl acrylate, 5 g of 2-methoxyethyl methacrylate and 4 g (initial addition) of 1,1,3,3-tetramethylbutylperoxy-2-ethylhexanoate was added dropwise over 3 hours. After stirring at the same temperature for 2 hours, 1 g (post addition) of 1,1,3,3-tetramethylbutylperoxy-2-ethylhexanoate was added three times with 1-hour intervals to complete the polymerization reaction. After completion, 38 g of xylene was added and dissolved to obtain copolymer solution A-1. The heating residue and weight average molecular weight Mw of A-1 are shown in Table 1. The weight average molecular weight Mw of the copolymer is a value determined by GPC from the copolymer obtained by removing, with n-hexane, nonpolymerizable organic acid metal salts from the copolymer.

### << Production Examples 7 to 18, Comparative Preparation Examples 1 to 10 (Copolymer Solutions A-2 to A-13, B-1 to B-10) >>

Using an organic solvent, a monomer and a polymerization initiator shown in Tables 1 and 2, a polymerization reaction was carried out in the same manner as in Production Example 6 to obtain copolymer solutions A-2 to A-10. Tables 1 to 2 show the viscosity, heating residue, and Mw of each obtained copolymer solution.
Table 1

**Table 1**

| Component Classification | | Component Name | Production Example | | | | | | | | | | | | |
|---|---|---|---|---|---|---|---|---|---|---|---|---|---|---|---|
| | | | 6 | 7 | 8 | 9 | 10 | 11 | 12 | 13 | 14 | 15 | 16 | 17 | 18 |
| Initial Solvent in Container | | Xylene | 30 | 30 | 30 | 30 | 30 | 30 | 30 | 30 | 30 | 30 | 30 | 30 | 30 |
| | | Propylene Glycol Monomethyl Ether | 30 | 30 | 30 | 30 | 30 | 30 | 30 | 30 | 30 | 30 | 30 | 30 | 30 |
| Triorganosilyl Group-containing Monomer (a) | | Triisopropylsilyl Acrylate | 15 | | | | | | 12 | | 20 | | | | |
| | | Triisopropylsilyl Methacrylate | | 15 | | | | 25 | | 15 | | 20 | 20 | 15 | 20 |
| | | Triphenylsilyl Methacrylate | | | 10 | | | | | | | | | | |
| | | Tri-n-butylsilyl Methacrylate | | | | 10 | | | | | | | | | |
| | | T-butyldiphenylsilyl Acrylate | | | | | 20 | | | | | | | | |
| Solution Containing Monomer (b) | | Monomer (b)-1 | 5(16.7) | 5(16.7) | | | | 10(33.3) | | 5(16.7) | 7(23.3) | 3(10) | 5(16.7) | 5(16.7) | |
| | | Monomer (b)-2 | | | 2(6.7) | | | | 3(10) | | | | | | |
| | | Monomer (b)-3 | | | | 5(16.7) | | | | | | | | | |
| | | Monomer (b)-4 | | | | | 5(20) | | | | | | | | |
| | | Monomer (b)-5 | | | | | | | | | | | | | 5(20) |
| Ethylenically Unsaturated Monomer (c) | | Methyl Methacrylate | 50 | 40 | 40 | 38 | 30 | 35 | 20 | 30 | 40 | 40 | 40 | 20 | 35 |
| | | Ethyl Acrylate | | | | | 10 | | 30 | | | | | 30 | |
| | | n-butyl Acrylate | 20 | 10 | 20 | 10 | 10 | 10 | | 10 | 20 | 10 | | | |
| | | 2-methoxyethyl Acrylate | 5 | 10 | | 10 | 15 | | 10 | 10 | | 10 | 35 | 30 | 40 |
| | | 2-methoxyethyl Methacrylate | 5 | 20 | 20 | 27 | | 15 | 20 | 30 | 10 | 17 | | | |
| | | 2-hydroxyethyl Methacrylate | | | | | | | 5 | | | | | | |
| | | Polyethylene Glycol Methyl Ether Methacrylate (n = 9) | | | 5 | | | 5 | | | | | | | |
| | | Vinyl Acetate | | | | | 10 | | | | 3 | | | | |
| | | Styrene | | | 3 | | | | | | | | | | |
| Total of Polymerizable Monomer Solids | | | 100 | 100 | 100 | 100 | 100 | 100 | 100 | 100 | 100 | 100 | 100 | 100 | 100 |
| Ratio of Monomer (a) / Monomer (b) | | | 3 | 3 | 5 | 2 | 4 | 3 | 4 | 3 | 3 | 7 | 4 | 3 | 4 |
| Polymerization Initiator | Initial Addition | 1,1,3,3-tetramethylbutylperoxy-2-ethylhexanoate | 4 | 4 | 4 | 4 | 4 | 4 | 4 | 2 | 4 | 4 | 4 | 4 | 4 |
| | Post Addition | 1,1,3,3-tetramethylbutylperoxy-2-ethylhexanoate | 1 x 3 times | 1 x 3 times | 1 x 3 times | 1 x 3 times | 1 x 3 times | 1 x 3 times | 1 x 3 times | 1 x 3 times | 1 x times | 1 x 3 times | 1 x 3 times | 1 x 3 times | 1 x 3 times |
| Solvent Added after Completion of Polymerization Reaction | | Xylene | 35 | 35 | 37 | 35 | 35 | 30 | 37 | 35 | 32 | 37 | 35 | 35 | 35 |
| Reaction Temperature (°C) | | | 85±5 | 85±5 | 85±5 | 85±5 | 85±5 | 85±5 | 85±5 | 85±5 | 85±5 | 85±5 | 85±5 | 85±5 | 85±5 |
| Heating Residue (%, 125 °C, 1 Hr) | | | 49.8 | 49.6 | 49.8 | 50.1 | 49.7 | 49.6 | 50.2 | 49.9 | 49.8 | 49.6 | 49.2 | 49.3 | 49.5 |
| Weight Average Molecular Weight (mw) | | | 15,100 | 16,200 | 15,800 | 15,200 | 15,500 | 15,600 | 14,300 | 31,000 | 15,600 | 16,800 | 15,400 | 16,200 | 15,500 |
| Copolymer Name | | | A-1 | A-2 | A-3 | A-4 | A-5 | A-6 | A-7 | A-8 | A-9 | A-10 | A-11 | A-12 | A-13 |

Table 2

**Table 2**

| Component Classification | | Component Name | Comparative Production Example | | | | | | | | | |
|---|---|---|---|---|---|---|---|---|---|---|---|---|
| | | | 1 | 2 | 3 | 4 | 5 | 6 | 7 | 8 | 9 | 10 |
| Initial Solvent in Container | | Xylene | 30 | 30 | 30 | 30 | 60 | 60 | 30 | 30 | 30 | 30 |
| | | Propylene Glycol Monomethyl Ether | 30 | 30 | 30 | 30 | | | 30 | 30 | 30 | 30 |
| Triorganosilyl Group-containing Monomer (a) | | Triisopropylsilyl Acrylate | 30 | 27 | | | 20 | | | | | 15 |
| | | Triisopropylsilyl Methacrylate | | | 15 | 8 | | 20 | | | 8 | |
| | | Triphenylsilyl Methacrylate | | | | | | | | | | |
| | | Tri-n-butylsilyl Methacrylate | | | | | | | | | | |
| | | T-butyldiphenylsilyl Acrylate | | | | | | | | | | |
| Solution Containing Monomer (b) | | Monomer (b)-1 | | 8(26.7) | 15(50) | | | | 10(33.3) | | | |
| | | Monomer (b)-2 | 15(50) | | | | | | | | 10(33.3) | |
| | | Monomer (b)-3 | | | | 1(3.3) | | | | 10(33.3) | | |
| | | Monomer (b)-4 | | | | | | | | | | 1(4) |
| Ethylenically Unsaturated Monomer (c) | | Methyl Methacrylate | 30 | 30 | 40 | 30 | 30 | 30 | | | 32 | 30 |
| | | Ethyl Acrylate | | | 20 | 30 | | 10 | 60 | 60 | 20 | 20 |
| | | n-butyl Acrylate | 15 | 10 | | | 10 | 10 | | | | |
| | | 2-methoxyethyl Acrylate | 10 | | | | 20 | 15 | 10 | 20 | | 5 |
| | | 2-methoxyethyl Methacrylate | | 20 | 10 | 6 | 20 | 15 | 20 | 10 | 30 | 29 |
| | | 2-hydroxyethyl Methacrylate | | | | 5 | | | | | | |
| | | Polyethylene Glycol Methyl Ether Methacrylate (n = 9) | | 5 | | 20 | | | | | | |
| | | Vinyl Acetate | | | | | | | | | | |
| | | Styrene | | | | | | | | | | |
| Total of Polymerizable Monomer Solids | | | 100 | 100 | 100 | 100 | 100 | 100 | 100 | 100 | 100 | 100 |
| Ratio of Monomer (a) / Monomer (b) | | | 2 | 3 | 1 | 8 | - | - | 0 | 0 | 1 | 15 |
| Polymerization Initiator | Initial Addition | 1,1,3,3-tetramethylbutylperoxy-2-ethylhexanoate | 4 | 4 | 4 | 4 | 7 | 7 | 3 | 3 | 4 | 4 |
| | Post Addition | 1,1,3,3-tetramethylbutylperoxy-2-ethylhexanoate | 1 x 3 times | 1 x 3 times | 1 x 3 times | 1 x 3 times | 1 x 3 times | 1 x 3 times | 1 x 3 times | 1 x 3 times | 1 x 3 times | 1 x 3 times |
| Solvent Added after Completion of Polymerization Reaction | | Xylene | 25 | 32 | 25 | 38 | 40 | 40 | 30 | 30 | 30 | 38 |
| Reaction Temperature (°C) | | | 85±5 | 85±5 | 85±5 | 85±5 | 85±5 | 85±5 | 85±5 | 85±5 | 85±5 | 85±5 |
| Heating Residue (%, 125 °C, 1 Hr) | | | 49.3 | 50.2 | 49.3 | 49.5 | 49.6 | 50.2 | 50.1 | 49.8 | 50.3 | 49.9 |
| Weight Average Molecular Weight (mw) | | | 16,500 | 15,200 | 15,800 | 16,300 | 15,100 | 16,000 | 14,900 | 15,100 | 16,200 | 15,600 |
| Copolymer Name | | | B-1 | B-2 | B-3 | B-4 | B-5 | B-6 | B-7 | B-8 | B-9 | B-10 |

### < Examples 1 to 22 and Comparative Examples 1 to 10 (Production of Coating Composition) >

The components shown in Tables 3 to 5 were blended in proportions (% by mass) shown in Tables 3 to 5, and mixed with glass beads having a diameter of 1.5 to 2.5 mm to disperse them, whereby a coating composition was prepared.
Table 3

**Table 3**

| Component Name | | Example | | | | | | | | | | | | |
|---|---|---|---|---|---|---|---|---|---|---|---|---|---|---|
| | | 1 | 2 | 3 | 4 | 5 | 6 | 7 | 8 | 9 | 10 | 11 | 12 | 13 |
| Copolymer A | A-1 | 24 | | | | | | | | | | | | |
| | A-2 | | 24 | | | | | | | | | | | |
| | A-3 | | | 24 | | | | | | | | | | |
| | A-4 | | | | 24 | | | | | | | | | |
| | A-5 | | | | | 24 | | | | | | | | |
| | A-6 | | | | | | 24 | | | | | | | |
| | A-7 | | | | | | | 24 | | | | | | |
| | A-8 | | | | | | | | 24 | | | | | |
| | A-9 | | | | | | | | | 24 | | | | |
| | A-10 | | | | | | | | | | 24 | | | |
| | A-11 | | | | | | | | | | | 24 | | |
| | A-12 | | | | | | | | | | | | 24 | |
| | A-13 | | | | | | | | | | | | | 24 |
| Release Modifier C | Gum Rosin Zinc Salt Solution | 8 | 8 | 8 | 8 | 8 | 8 | 8 | 8 | 8 | 8 | 8 | 8 | 8 |
| Antifoulant B | Cuprous Oxide | 45 | 45 | 45 | 45 | 45 | 45 | 45 | 45 | 45 | 45 | 45 | 45 | 45 |
| | Copper Pyrithione | 3 | 3 | 3 | 3 | 3 | 3 | 3 | 3 | 3 | 3 | 3 | 3 | 3 |
| Pigment | Red Iron Oxide | 3 | 3 | 3 | 3 | 3 | 3 | 3 | 3 | 3 | 3 | 3 | 3 | 3 |
| | Talc | 2 | 2 | 2 | 2 | 2 | 2 | 2 | 2 | 2 | 2 | 2 | 2 | 2 |
| | Mica | 2 | 2 | 2 | 2 | 2 | 2 | 2 | 2 | 2 | 2 | 2 | 2 | 2 |
| | Zinc Oxide | 2 | 2 | 2 | 2 | 2 | 2 | 2 | 2 | 2 | 2 | 2 | 2 | 2 |
| | Titanium Oxide | 1 | 1 | 1 | 1 | 1 | 1 | 1 | 1 | 1 | 1 | 1 | 1 | 1 |
| | Organic Red Pigment | 1 | 1 | 1 | 1 | 1 | 1 | 1 | 1 | 1 | 1 | 1 | 1 | 1 |
| Other Additives | Tetraethoxysilane | 1 | 1 | 1 | 1 | 1 | 1 | 1 | 1 | 1 | 1 | 1 | 1 | 1 |
| | Disparlon A603-20X | 3 | 3 | 3 | 3 | 3 | 3 | 3 | 3 | 3 | 3 | 3 | 3 | 3 |
| Solvent | Xylene | 5 | 5 | 5 | 5 | 5 | 5 | 5 | 5 | 5 | 5 | 5 | 5 | 5 |
| Total | | 100 | 100 | 100 | 100 | 100 | 100 | 100 | 100 | 100 | 100 | 100 | 100 | 100 |

Table 4

**Table 4**

| Component Name | | Example | | | | | | | | |
|---|---|---|---|---|---|---|---|---|---|---|
| | | 14 | 15 | 16 | 17 | 18 | 19 | 20 | 21 | 22 |
| Copolymer A | A-2 | 26 | 26 | 26 | 26 | 26 | 26 | 26 | 26 | 26 |
| Release Modifier C | Gum Rosin Zinc Salt Solution | | | | | | 8 | | | 8 |
| | Hydrogenated Rosin Zinc Salt Solution | 8 | | | | | | | | |
| | Gum Rosin Copper Salt Solution | | 8 | | | | | | | |
| | Hydrogenated Rosin Copper Salt Solution | | | 8 | | | | | | |
| | Gum Rosin Solution | | | | 8 | | | | | |
| | Quinton 1500 | | | | | 8 | | | | |
| Antifoulant B | Cuprous Oxide | 45 | 45 | 45 | 45 | 45 | 45 | 43 | 43 | 43 |
| | Copper Pyrithione | 3 | 3 | 3 | 3 | | 3 | 3 | 3 | 3 |
| | Sea-nine 211 | | | | | | 2 | | | |
| Pigment | Red Iron Oxide | 3 | 3 | 3 | 3 | 3 | 3 | 3 | 3 | 3 |
| | Talc | 2 | 2 | 2 | 2 | | 2 | 8 | 8 | 2 |
| | Mica | 2 | 2 | 2 | 2 | 2 | 2 | 2 | 2 | 2 |
| | Zinc Oxide | 2 | 2 | 2 | 2 | | 2 | 2 | 2 | 2 |
| | Titanium Oxide | 1 | 1 | 1 | 1 | 1 | 1 | 1 | 1 | 1 |
| | Organic Red Pigment | 1 | 1 | 1 | 1 | 1 | 1 | 1 | 1 | 1 |
| Plasticizer | Chlorinated Paraffin | | | | | | | 2 | | 2 |
| | Sanso Cizer E-2000H | | | | | | | | 2 | |
| Other Additives | Tetraethoxysilane | 1 | 1 | 1 | 1 | 1 | 1 | 1 | 1 | 1 |
| | Disparlon A603-20X | 3 | 3 | 3 | 3 | 3 | 3 | 3 | 3 | 3 |
| Solvent | Xylene | 3 | 3 | 3 | 3 | 3 | 1 | 5 | 5 | 3 |
| Total | | 74 | 74 | 74 | 74 | 74 | 74 | 100 | 100 | 100 |

Table 5

**Table 5**

| Component Name | | Comparative Example | | | | | | | | | |
|---|---|---|---|---|---|---|---|---|---|---|---|
| | | 1 | 2 | 3 | 4 | 5 | 6 | 7 | 8 | 9 | 10 |
| Copolymer A | B-1 | 24 | | | | | | | | | |
| | B-2 | | 24 | | | | | | | | |
| | B-3 | | | 24 | | | | | | | |
| | B-4 | | | | 24 | | | | | | |
| | B-5 | | | | | 12 | | | | 24 | |
| | B-6 | | | | | | 12 | | | | |
| | B-7 | | | | | | 12 | | | | 24 |
| | B-8 | | | | | 12 | | | | | |
| | B-9 | | | | | | | 24 | | | |
| | B-10 | | | | | | | | 24 | | |
| Release Modifier C | Gum Rosin Zinc Salt Solution | 8 | 8 | 8 | 8 | 8 | 8 | 8 | 8 | 8 | 8 |
| Antifoulant B | Cuprous Oxide | 45 | 45 | 45 | 45 | 45 | 45 | 45 | 45 | 45 | 45 |
| | Copper Pyrithione | 3 | 3 | 3 | 3 | 3 | 3 | 3 | 3 | 3 | 3 |
| Pigment | Red Iron Oxide | 3 | 3 | 3 | 3 | 3 | 3 | 3 | 3 | 3 | 3 |
| | Talc | 2 | 2 | 2 | 2 | 2 | 2 | 2 | 2 | 2 | 2 |
| | Mica | 2 | 2 | 2 | 2 | 2 | 2 | 2 | 2 | 2 | 2 |
| | Zinc Oxide | 2 | 2 | 2 | 2 | 2 | 2 | 2 | 2 | 2 | 2 |
| | Titanium Oxide | 1 | 1 | 1 | 1 | 1 | 1 | 1 | 1 | 1 | 1 |
| | Organic Red Pigment | 1 | 1 | 1 | 1 | 1 | 1 | 1 | 1 | 1 | 1 |
| Other Additives | Tetraethoxysilane | 1 | 1 | 1 | 1 | 1 | 1 | 1 | 1 | 1 | 1 |
| | Disparlon A603-20X | 3 | 3 | 3 | 3 | 3 | 3 | 3 | 3 | 3 | 3 |
| Solvent | Xylene | 5 | 5 | 5 | 5 | 5 | 5 | 5 | 5 | 5 | 5 |
| Total | | 100 | 100 | 100 | 100 | 100 | 100 | 100 | 100 | 100 | 100 |

Details of each component in Tables 3 to 5 are as follows.
Gum rosin zinc salt solution: solid content about 50% xylene solution
Hydrogenated rosin zinc salt solution: solid content about 50% xylene solution
Gum rosin copper salt solution: solid content about 50% xylene solution
Hydrogenated rosin copper salt solution: solid content about 50% xylene solution
Gum rosin solution: solid content about 50% xylene solution
Quinton 1500: alicyclic hydrocarbon resin manufactured by Zeon Corporation, 50% xylene solution
Cuprous oxide: NC-301 manufactured by Nissin Chemco Ltd., average particle diameter 3 µm
Copper pyrithione: manufactured by Arch Chemicals, Copper Omagin
Sea-Nine 211: manufactured by R & H Co., Ltd, active ingredient 30% xylene solution
Red iron oxide: product name "TODA COLOR EP-13D" (manufactured by Toda Pigment Corp.).
Talc: Matsumura Industrial, Crown Talc 3S
Mica: Wakimoto Mica Co., Ltd., Mica Shiratama
Zinc oxide: manufactured by Seido Chemical Industry Co., Ltd., Zinc Oxide type II (trade name)
Titanium oxide: Furukawa Co., Ltd., FR-41
Organic red pigment: manufactured by Sanyo Color Works, LTD., Scarlet TR
Tetraethoxysilane: manufactured by Kishida Chemical Co., Ltd., special grade reagent
Disparlon A603-20X: manufactured by Kusumoto Chemicals, fatty acid amide thixotropic agent, active ingredient 30% xylene paste
Chlorinated paraffin: TOYOPARAX 150 manufactured by Tosoh Corporation
Sanso Cizer E-2000H: manufactured by New Japan Chemical Co., Ltd.

Hereinafter, various test examples will be described. The results obtained in each test example are shown in Table 6.

### << Test example 1 (Test for Coating Composition Stability) >>

The coating compositions obtained in Examples 1 to 22 and Comparative Examples 1 to 10 were placed in a 100 mL wide-mouthed tin can, sealed and stored in a thermostat at 45 °C for 3 months, then the viscosity of the coating composition was measured by use of a Brookfield viscometer.

Evaluation was carried out by the following method.
A: Viscosity change of the coating composition was less than 500 mPa•s/25 °C (the state of the coating composition hardly changed)
B: Viscosity change of the coating composition was 500 to 5,000 mPa•s/25 °C (slightly thickened)
C: Viscosity change of the coating composition was 5,000 mPa•s/25 °C to 100,000 mPa•s/25 °C (greatly thickened)
D: Viscosity of the coating composition changed to unmeasurable (gelled or solidified)

### <<Test Example 2 (Adhesion Test of Coating Film) >>

Adhesion test of coating film was conducted according to JIS K-5600-5-6. Specifically, the coating compositions obtained in Examples 1 to 22 and Comparative Examples 1 to 10 were coated on a blast-finished tinplate (75 × 150 × 2 mm) so as to have a dry coating film thickness of about 100 µm, dried at 40 °C for 1 day, and then adhesion test was conducted.

Evaluation was carried out by the following method.

Eleven scratches in each of the vertical and horizontal directions reaching the substrate (tinplate) were formed with a cutter in the dry coating film to prepare 100 squares of 2 mm square were prepared. A cellophane tape (tape width 24 mm made by Nichiban Co., Ltd.) was stuck on the 100 squares so that air bubbles did not get in, one end of this tape was peeled off rapidly, and the adhesion state of the coating film was visually observed.

A: the number of squares that did not peel is 70 to 100
B: the number of squares that did not peel is 40 to 69
C: the number of squares that did not peel is 20 to 39
D: the number of squares that did not peel is 0 to 19

### << Test Example 3 (Flexibility Test of Coating Film) >>

The coating compositions obtained in Examples 1 to 22 and Comparative Examples 1 to 10 were coated on a blast finished tinplate (75 × 150 × 2 mm) so as to have a thickness of about 100 µm and dried at 40 °C for 1 day and then bent at 90 ° to check the state of the coating film by visual observation.

Evaluation was carried out by the following method.
A: Cracks hardly occurred
B: Fine cracks occurred
C: Large cracks occurred
D: Part of the coating film was easily peeled off

### << Test Example 4 (Rotary Test) >>

A rotating drum with a diameter of 515 mm and a height of 440 mm was installed in the center of an aquarium so that it could be rotated by a motor. In addition, a cooling device for keeping the temperature of the seawater constant and a pH automatic controller for keeping the pH of the seawater constant are installed.

Two test plates were prepared according to the following method.

First, a rust preventive paint (vinyl type A/C) was coated on a hard polyvinyl chloride plate (75 × 150 × 1 mm) so as to have a dry coating film thickness of about 50 µm and dried to form a rustproof coating film. Thereafter, the coating compositions obtained in Examples 1 to 22 and Comparative Examples 1 to 10 were each coated on the rustproof coating film so as to have a dry coating film thickness of about 300 µm. The obtained coating material was dried at 40 °C for 3 days to prepare a test plate having a dry coating film with a thickness of about 300 µm.

One of the prepared test plates was fixed to the rotating drum of the rotating apparatus of the above apparatus so as to be in contact with sea water and the rotating drum was rotated at a speed of 20 knots. Meanwhile, the seawater temperature was kept at 25 °C, pH was kept at 8.0 to 8.2, and seawater was replaced every week.

By measuring the remaining film thickness at the beginning of each test plate and every 3 months after the start of the test with a laser focus displacement meter and calculating the dissolved coating thickness from the difference, the dissolved film amount per month (µm/month) was obtained. The measurement was carried out for 24 months, and the coating film dissolution amount was calculated every 12 months elapse.

After drying the test plate after the end of the rotary test (after 24 months), the surface of each coating film was observed with the naked eye and the condition of the coating film was evaluated.

Evaluation was carried out by the following method.
A: No abnormality was observed
B: Hair cracks were slightly observed
C: Hair cracks were observed on the entire surface of the coating film
D: Defects such as large cracks, blisters or peeling were observed on the coating film

### << Test Example 5 (Antifouling Test) >>

The coating compositions obtained in Examples 1 to 22 and Comparative Examples 1 to 10 were coated on both sides of a hard vinyl chloride sheet (100 × 200 × 2 mm) so as to have a dry coating film thickness of about 200 µm. The obtained coating material was dried at room temperature (25 °C) for 3 days to prepare a test plate having a dry coating film with a thickness of about 200 µm. This test plate was immersed in 1.5 m under the sea surface in Owase City, Mie Prefecture, and fouling of the test plate due to the deposit was observed for 24 months.

Evaluation was carried out by visually observing the condition of the surface of the coating film, and judged according to the following criteria.
A: Level at which fouling organisms such as shellfish and algae do not adhere, and slime also hardly adheres
B: Level at which fouling organisms such as shellfish and algae do not adhere, and slime thinly adheres (the extent that the coating film surface can be seen) and it can be removed by wiping the coating film lightly with a brush
C: Level at which fouling organisms such as shellfish and algae do not adhere, and slime thinly adheres (the extent that the coating film surface can be seen) and it cannot be removed by wiping the coating film strongly with a brush
D: Level at which fouling organisms such as shellfish and algae do not adhere, and slime thickly adheres (the extent that the coating film surface cannot be seen) and it cannot be removed by wiping the coating film strongly with a brush
E: Level at which fouling organisms such as shellfish and algae adhere
Table 6

**Table 6**

| | | Coating Composition Stability | Adhesion Test | Flexibility Test | Dissolved Amount and State of Coating Film in Rotary Test | | | Antifouling Test | |
|---|---|---|---|---|---|---|---|---|---|
| | | | | | 0 To 12 Months Average Coating Film Dissolution Amount (µm / Month) | 12 To 24 Months Average Coating Film Dissolution Amount (µm / Month) | After 24 Months Average Coating Film Dissolution Amount (µm / Month) | After 12 Months | After 24 Months |
| | | 45 °C 3 Months Later | | | | | | | |
| | 1 | A | A | A | 8.2 | 8.1 | A | A | A |
| | 2 | A | A | A | 6.2 | 6.8 | A | A | A |
| | 3 | B | B | B | 8.6 | 8.8 | B | A | B |
| | 4 | B | A | A | 9.1 | 8.8 | B | A | B |
| | 5 | A | B | B | 3.5 | 3.9 | B | A | B |
| | 6 | A | A | A | 8.6 | 8.4 | A | A | A |
| | 7 | A | A | A | 4.4 | 4.0 | A | A | A |
| | 8 | A | A | A | 3.4 | 3.1 | A | A | A |
| | 9 | A | A | A | 9.2 | 8.7 | A | A | A |
| Example | 10 | A | A | A | 7.3 | 7.6 | A | A | A |
| | 11 | A | A | A | 6.5 | 7.5 | A | A | A |
| | 12 | A | A | A | 8.3 | 8.1 | A | A | A |
| | 13 | A | C | C | 8.2 | 8.6 | C | A | A |
| | 14 | A | A | A | 5.8 | 6.2 | A | A | A |
| | 15 | A | A | A | 4.2 | 4.5 | A | A | A |
| | 16 | A | A | A | 3.7 | 3.5 | A | A | A |
| | 17 | B | A | A | 6.2 | 6.5 | A | A | A |
| | 18 | A | B | B | 4.2 | 3.8 | B | A | B |
| | 19 | A | A | A | 6.5 | 7.2 | A | A | A |
| | 20 | A | A | A | 7.2 | 6.9 | A | A | A |
| | 21 | A | A | A | 7.5 | 7.6 | A | A | A |
| | 22 | A | A | A | 7.0 | 7.6 | A | A | A |
| Comparative Example | 1 | B | B | B | 24.0 | Unmeasurable (No Coating Film) | (No Coating Film) | A | E |
| | 2 | B | A | A | 14.3 | Unmeasurable (almost No Coasting | (almost No Coating Film) | A | D |
| | 3 | A | B | B | 8.9 | 1.3 | B | C | D |
| | 4 | A | A | A | 0.5 | 0.2 | B | D | E |
| | 5 | D | D | D | 8.9 | 3.1 | D | D | E |
| | 6 | D | D | D | 7.9 | 1.9 | D | D | E |
| | 7 | A | B | B | 3.2 | 1.3 | B | B | D |
| | 8 | A | A | A | 5.6 | 1.5 | C | A | D |
| | 9 | A | A | A | 4.2 | 2.8 | C | A | C |
| | 10 | A | B | B | 5.6 | 0.6 | B | B | D |

### <Discussion>

From Table 6, it can be seen that the coating compositions of the present invention (Examples 1 to 22) have good storage stability. In addition, it is understood that the coating film formed using the coating composition of the present invention firmly adheres to the tinplate and cracks are unlikely to occur even when bent. This coating film shows that the amount of dissolution in sea water is about 2 to 10 µm per month (average per year) and maintains a stable dissolution amount even after 24 months elapse. This indicates that the coating film dissolving rate and the water permeability are balanced, which is the effect of the present invention, and it is considered that the formation of the swollen layer is suppressed. As a result, the coating film formed using the coating composition of the present invention is excellent in water resistance and does not cause cracks, hair cracks, etc., so that it can maintain antifouling performance for a long time. Furthermore, it can be seen that the coating film formed using the coating composition of the present invention has no adhesion of fouling organisms such as shellfish and algae, and there is little attachment of slime. This indicates that since the balance between dissolubility and water permeability of the coating film is suitably designed, good surface renewal property is maintained for a long time.

On the other hand, since the coating film formed using the coating composition of Comparative Examples 1 and 2 has a high content of hydrolyzable groups, the dissolution rate is too large from the beginning, and the coating film disappears after 24 months. In this case, it is difficult to design the coating thickness. In addition, fouling organisms such as shellfish and algae adhere to this coating film after immersion for 24 months.

In the coating film formed using the coating composition of Comparative Example 3, the balance between water permeability and coating film dissolution was not well-balanced, the dissolution greatly dropped in the latter half, and hair cracking occurred. In addition, it can be seen that the slime starts to adhere firmly to the coating film from the beginning, and it is thick and strongly attached after 24 months.

In Comparative Example 4, since the content of the hydrolyzable group is too low, coating film dissolution hardly occurs. Although the state of the coating film is good, since the coating film is not dissolved, the antifouling property is inferior. In the antifouling test, the coating film of Comparative Example 4 is gradually contaminated and biofouling is observed after 24 months.

Comparative Examples 5 and 6 are composed of a simple mixture of a triorganosilyl group-containing copolymer and a metal-containing copolymer. In this case, it is difficult to maintain a balance between water permeability and coating film dissolution, and thus coating film dissolution cannot be maintained for a long time. In addition, cracks are generated due to poor compatibility. In addition, this coating film has poor antifouling properties as coating film dissolution falls in the latter half, and widespread biofouling is observed.

In Comparative Examples 7 to 10, since either the triorganosilyl group-containing monomer or the metal-containing monomer did not reach the predetermined amount, the balance between the water permeability and the coating film dissolution could not be kept, and thus coating film dissolution decreases the in the latter half. Along with this, the antifouling properties are deteriorated, and strong slime adhesion or biofouling is observed.

## Claims

1. A copolymer for an antifouling coating composition, wherein the copolymer obtainable by copolymerizing monomers (a) to (c).
(a) 10 to 25% by mass of a triorganosilyl group-containing monomer represented by a general formula (I)
(b) 2 to 10 % by mass of one or more metal-containing polymerizable monomers represented by a general formula (II) or (III), and
(c) 65 to 88% by mass of an ethylenically unsaturated monomer other than the monomers (a) and (b), wherein
general formula (I) is 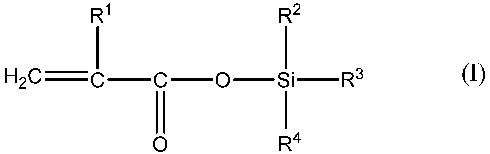 wherein, R¹ is a group selected from a hydrogen atom and a methyl group, and each of R² to R⁴ is a group selected from an alkyl group and an aryl group, which are the same or different from each other:
general formula (II) is 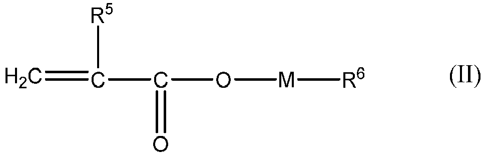 wherein, R⁵ is a group selected from a hydrogen atom or a methyl group, M represents a metal atom of Mg, Zn or Cu, and R⁶ represents an organic acid residue; and
general formula (III) is 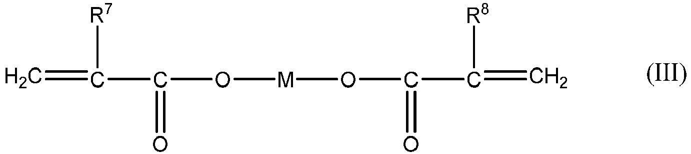 wherein, R⁷ and R⁸ are groups selected from a hydrogen atom or a methyl group, and M represents a metal atom of Mg, Zn or Cu.

2. The copolymer of Claim 1, wherein R⁶ of the monomer (b) is a residue of versatic acid.

3. An antifouling coating composition comprising the copolymer of Claim 1.

4. An antifouling coating film, wherein the antifouling coating film is formed of the antifouling coating composition of Claim 3.
